Europäisches Patentamt

European Patent Office

Office européen des brevets

(11) Publication number: **0 074 810**
**B1**

(12) **EUROPEAN PATENT SPECIFICATION**

(45) Date of publication of patent specification: **11.03.87**

(21) Application number: **82304758.4**

(22) Date of filing: **09.09.82**

(51) Int. Cl.⁴: **H 04 N 7/16, G 11 B 23/28**

(54) Subscription television system.

(30) Priority: **10.09.81 JP 142836/81**
**10.09.81 JP 142837/81**

(43) Date of publication of application:
**23.03.83 Bulletin 83/12**

(45) Publication of the grant of the patent:
**11.03.87 Bulletin 87/11**

(84) Designated Contracting States:
**AT BE CH DE FR GB LI LU NL**

(56) References cited:
**WO-A-80/02901**
**GB-A-2 067 871**
**US-A-3 919 462**

(73) Proprietor: **SONY CORPORATION**
**7-35 Kitashinagawa 6-Chome Shinagawa-ku**
**Tokyo 141 (JP)**

(72) Inventor: **Fujiumura, Yasushi C/o. Sony**
**Corporation**
**7-35 Kitashinagawa 6-chome**
**Shinagawa-ku Tokyo (JP)**
Inventor: **Okada, Takashi C/o. Sony Corporation**
**7-35 Kitashinagawa 6-chome**
**Shinagawa-ku Tokyo (JP)**
Inventor: **Yamagiwa, Kazuo C/o. Sony**
**Corporation**
**7-35 Kitashinagawa 6-chome**
**Shinagawa-ku Tokyo (JP)**

(74) Representative: **Ayers, Martyn Lewis Stanley**
**et al**
**J.A. KEMP & CO. 14 South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a subscription television system and more particularly to a system in which television signals are scrambled for broadcasting, the scrambled signals being transmitted in a form suitable for recording the transmitted signals by means of a recording and playback apparatus such as a video tape recorder.

In recent years, there has been proposed a scramble broadcasting system in which a specific program is transmitted by a broadcasting station after having been scrambled and the transmitted program can be received by only subscribers having special decoders based on a contract with the broadcasting station, and experimental local broadcasting is in progress on a small scale. In scrambled broadcasting the television signals of specific program are scrambled by changing the level thereof extending over an optional period or altering the order of the signals and then transmitted from the broadcasting station. Accordingly, even if the television signals in the scrambled broadcast are received by an ordinary or conventional receiver, correct pictures and sound cannot be reproduced. Normal pictures and sound can be received only by subscribers who have made a contract with the broadcasting station and have a decoder which can unscramble the signals previously scrambled at the transmitting station.

In a scrambled broadcasting system it is desirable to satisfy the following conditions:

(1) Simultaneous unscrambling cannot be done while receiving the scrambled program, i.e. the reception of a correct program is not possible in real time.

(2) The program must be recorded by the VTR before reproduction.

(3) To play the tape on which the program is recorded, a VTR with a decoder must be used to reproduce the program correctly.

(4) Any type of VTR can be used.

(5) Modification for the conventional VTR, required for adding a decoder thereto, must be at a minimum.

(6) The scramble broadcast is put on the air during an idle time such as midnight, without utilizing an ordinary broadcasting time slot.

It is one object to provide an improved subscription television system in which a scrambled television signal can be broadcast.

It is another object to provide a system in which the broadcasting scrambled television signal is temporarily recorded in a recorder and upon reproduction thereof, the scrambled television signal is unscrambled to enable the television signal to display on the TV screen.

WO 80/02901 discloses a system according to the precharacterising part of claim 1. In that arrangement two sets of keys are used, the keys of one of the sets being transmitted before the signals which they are intended to be used to unscramble. The present invention relates to a system in which the keys are transmitted only after the signals in question. Thus according to the present invention there is provided a television system comprising means for scrambling at least either one of video signal and audio signal of specific programs in accordance with a predetermined scrambling scheme, means for generating a control signal in response to the predetermined scrambling scheme, said control signal including a key signal which is used for unscrambling the signal scrambled in said scrambling means characterised by means for transmitting said key signal only after termination of said specific program which is to be unscrambled by first recording it and then unscrambling it during replay by reference to that key signal.

Other features of the invention are characterised in the subclaims.

These and other features and advantages of the invention will become apparent from the following more detailed description taken in conjunction with the accompanying drawings, in which:—

Figures 1 and 2 are block diagrams showing receiving components of a subscription television system in which the present invention may be used;

Figure 3 shows the format of the transmitted signal in an embodiment of this invention;

Figure 4 is a block diagram showing one form of the decoder illustrated in Figure 1;

Figure 5 is a graph showing one example of a scrambled video signal;

Figure 6 is a block diagram of a scramble circuit which performs the scrambling operation as shown in Figure 5;

Figure 7 is a block diagram showing another form of a scramble circuit;

Figure 8 is a graph showing another example of a scrambled video signal;

Figure 9 shows a picture on a TV screen when the video signal scrambled as shown in Figure 8 is reproduced as it is;

Figure 10 is a block diagram of a scramble circuit which performs the scrambling operation as shown in Figure 8;

Figure 11 shows another picture on a TV screen when the scrambled video signal is reproduced as it is;

Figures 12 and 13 are block diagrams of other scramble circuits;

Figure 14 is a graph which is used for explaining the scrambling of the audio signal of the television signal;

Figure 15 is a block diagram of the scramble circuit which performs the scrambling operation shown in Figure 14;

Figure 16 is a graph which is used for explaining another way of scrambling the audio signal; and

Figure 17 is a block diagram of the scramble circuit which performs the scrambling operation shown in Figure 16.

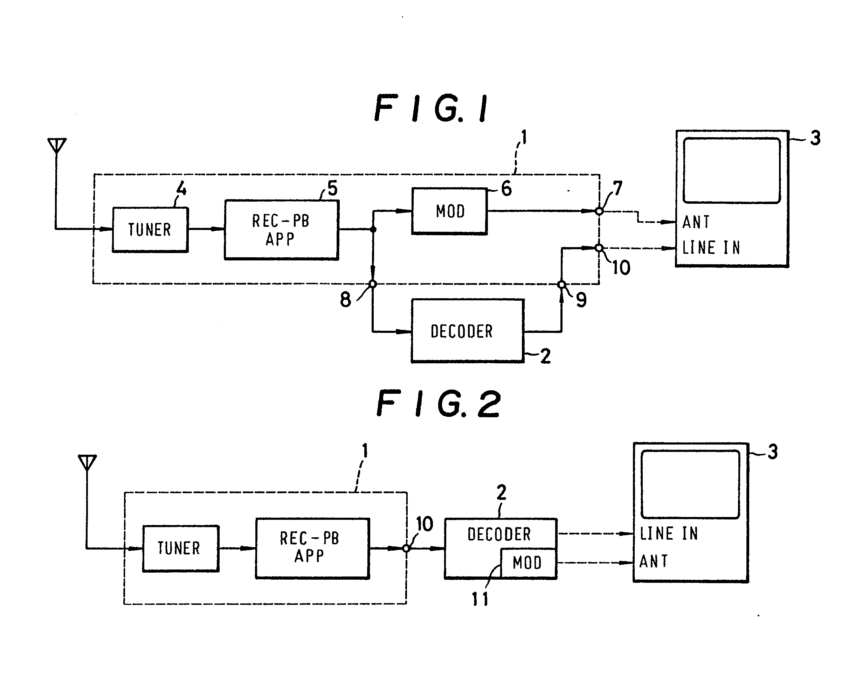

Reference is first primarily directed to the block diagrams of Figures 1 and 2 which illustrate a typical connection of a VTR 1, a decoder 2 and a receiver 3.

In Figure 1, a conventional helical scan type VTR is used as the VTR 1. The VTR comprises a tuner 4, a recording and playback apparatus 5 including a mechanism for recording and playback as well as circuitry, a modulator 6 which modulates a regenerated video signal and an audio signal onto a spare frequency channel. The modulated signals are applied to an antenna terminal (ANT) of the receiver 3 from an output terminal 7. Scrambled video and audio signals from the recording and playback apparatus 5 are applied to the decoder 2 via a terminal 8 and unscrambled therein to obtain the normal signals. The normal signals pass again through the VTR via an input terminal 9 and an output terminal 10 thereof and are applied to a LINE-IN terminal of the receiver 3.

Referring now to Figure 2 wherein a modulator 11 is incorporated in the decoder 2, the unscrambled signals are converted into a signal in a spare frequency channel and are applied to the antenna terminal (ANT). If the unscrambled signals are not modulated onto a carrier, they are applied to the LINE-IN terminal.

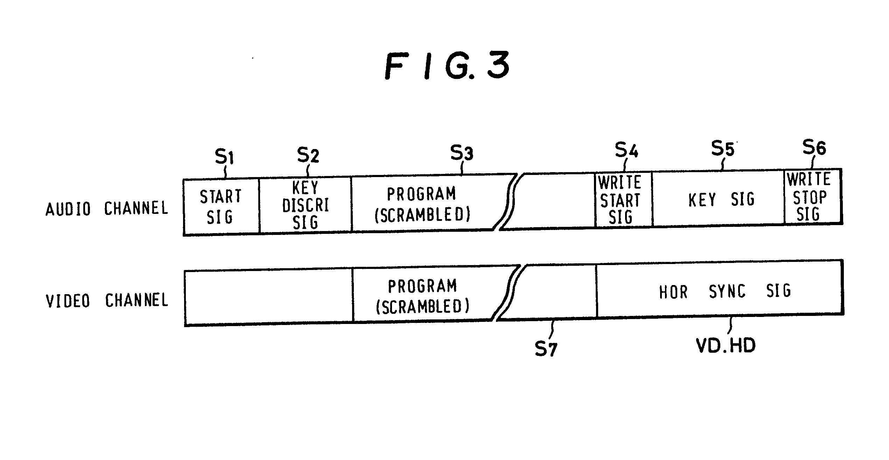

In Figure 3, there are indicated the contents of the signal to be transmitted when a certain program is to be broadcast in scrambled form.

In the audio channel, there are added a start signal $S_1$ representing the start of the scrambled program, and a key discrimination signal $S_2$ used for identifying the kind of a key signal $S_5$ to be described later in detail, as shown in the drawing. Next, a scrambled audio signal $S_3$ for the program is added. When the program is completed, a write start signal $S_4$ for writing the key signal $S_5$ for unscrambling the scrambled signals $S_3$ ($S_7$) is added. Finally, a write stop signal $S_6$ is added. In the video channel, subsequent to the scrambled program video signal $S_7$ corresponding to the signal $S_3$ in the audio channel, a vertical sync signal VD and a horizontal sync signal HD are added to the portions corresponding to that of the signals $S_4$—$S_6$ in the audio channel.

A 32 bit binary code signal using a NRZ modulation system, for example, is utilized for the signals $S_1$, $S_2$, $S_4$, $S_5$ and $S_6$ in the audio channel excepting the program. This binary code signal is modulated in FSK mode and then superimposed on the television signals. In this case, for example, "1" and "0" in the binary code are modulated into 1000 Hz and 600 Hz respectively.

When the scrambled program is to be broadcast late at night, the VTR 1, decoder 2 and receiver 3 may be put into operation by detecting the start signal $S_1$.

Assume now that a certain program is to be scrambled by changing the level of signal in one field unit. In this case, the signal level of an optional field period in an optional given period of time of the video signal, for example, is lowered by a required amount, and this procedure is repeated every such given period. For example, assuming that the given period is divided into five fields and only the first and third fields of said five fields are lowered in its level, the unscrambling operation at the receiving side would be accomplished by raising the gain of an amplifier at the intervals corresponding to the first and third fields of every five fields. If the key in the case where the gain is raised is assumed to be "1", the key signal can be represented by a code pattern of "10100". Whereas, the audio signal is also scrambled and unscrambled similarly.

In the illustrated embodiments, the unscrambling operation after completing the recording of the program in the VTR (1), will be accomplished by writing the key signal $S_5$ into the memory included in the decoder 2, and verifying the key signal $S_5$ with the reproduced signal while always reading the key signal $S_5$ may be changed every program or, every time, day, week or month so as to keep the contents thereof confidential to the persons other than the formal contractors. For this reason, when a large number of programs are recorded, various kinds of key signals will be written in the memory. In order to make possible the discrimination of which key code must be used to unscramble the desired program at the time of playback, the key discrimination signal $S_2$ is added ahead of the program.

As previously stated, in the illustrated embodiment, the key signal $S_5$ is added to the end of the program. For this reason, the scramble broadcasting cannot be watched in real time. The reproduction of the correct program becomes possible only after having been recorded in the tape by use of the VTR 1. If the key signal $S_5$ is not recorded in the tape, the unscrambling of a copy tape, if any, is not possible because there is no key. In addition, even if the key signal is recorded in a tape, unscrambling is not also possible so long as there is no decoder. The horizontal and vertical sync signals HD and VD are added in order to obtain clock pulses used in writing the key signals.

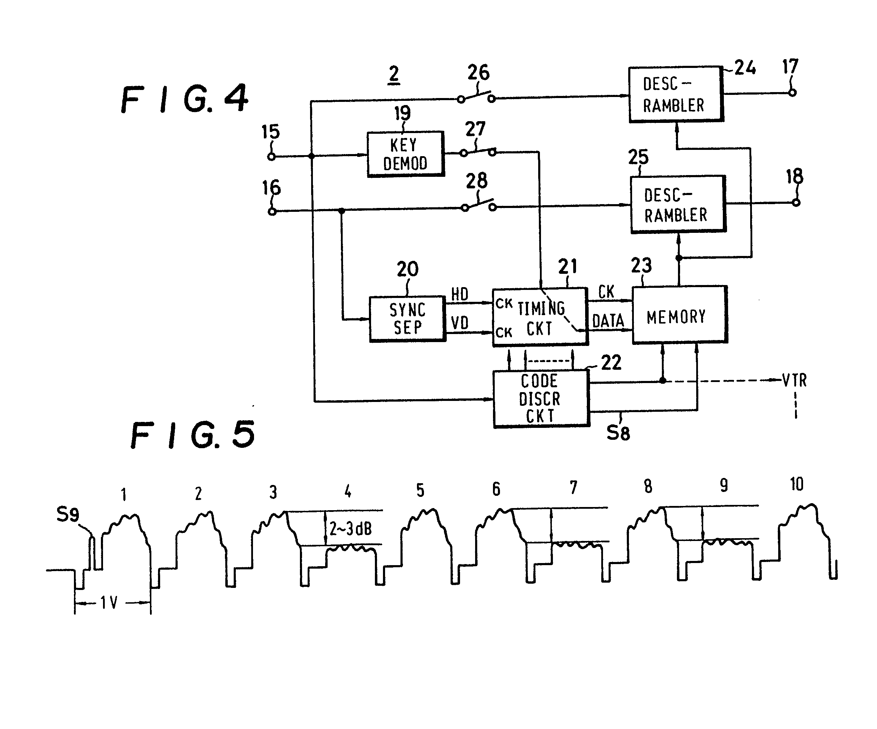

Next, one form of the decoder 2 will be explained in detail in conjunction with Figure 4.

The decoder 2, as shown in the drawing, comprises an audio signal input terminal 15, a video signal input terminal 16, an audio signal output terminal 17, a video signal output terminal 18, a key signal demodulator 19, a sync separation circuit 20, a timing circuit 21, a code discriminator 22, a memory 23, an audio signal descrambler 24, a video signal descrambler 25 and switches 26, 27 and 28, etc.

At the time of recording, the switches 26 and 28 are open and the switch 27 is closed. The input terminal 15 is supplied with the signals $S_1$—$S_6$ successively from the VTR 1 located at the preceding stage, and the input terminal 16 is supplied with the signals $S_7$, VD and HD. At this juncture, the VTR is set to the recording mode E—E and the input terminals 15 and 16 are supplied with signals for the motor.

When the start signal $S_1$ in Figure 3 is first detected by the code discriminator 22 from the signals applied to the input terminal 15, the respective circuits are operated in response to its detection. Next, if the key discrimination signal $S_2$ is detected and the kind of the key signal $S_5$ of the program is identified, the identification signal $S_8$ is written in the memory 23. The sync separation circuit 20 extracts the signals VD and HD from the scrambled video signal applied to the input terminal 16 and drives the timing circuit 21. When the program ends, the write start signal $S_4$ is detected and the memory 23 is switched to the write-in mode for the key signal $S_5$. Then, the demodulator 19 demodulates the FSK-modulated key signal $S_5$ to obtain the binary coded key signal. This key signal is written in the memory 23 in a form corresponding to the identification signal $S_8$ after having been synchronized with the clock pulses through the timing circuit 21. Meanwhile, the signals VD and HD are supplied from the video channel and the write-in clocks synchronized with VD and HD are obtained. Alternatively, the arrangement must be such that when the write start signal $S_4$ is detected by the code discriminator 22, the key signal $S_5$ is not recorded on the tape by applying the detected signal to the VTR as shown by the dotted line in the drawing to stop the operation of the recording circuit. When the writing of the key signal $S_5$ ends, the write stop signal $S_6$ is detected and the writing operation is stoppped. As a result, the scrambled video and audio signals and other signals ($S_1$, $S_2$, $S_4$—$S_6$ and so on) are recorded in the tape, and the key signal for the program and the kind of the key signal are written in the memory 23. The aforesaid operation is performed every 6 time a scrambled program is recorded, and the key signal for each program and the key discrimination signal therefor are written in the memory 23.

At the time of playback, the VTR 1 is set to the playback mode, and at the same time, the switches 26 and 28 are closed and the switch 27 is opened. The input terminal 15 is supplied with the signal obtained by modulating the signal reproduced from the audio track of the desired program recorded in the tape, and the input terminal 16 is supplied with the signal obtained by modulating the signal reproduced from the video track corresponding to the program. First of all, when the reproduced key discrimination signal $S_2$ is detected by the code discriminator 22, the corresponding key signal recorded in the memory 23 is read out. This reading operation continues until the end of reproduction, and the read-out key signal is applied to the descramblers 24 and 25. The descramblers 24 and 25 unscramble the scrambled audio and video signals inputted thereto, depending on the code pattern of the key signal. In this case, if the scrambling method is one which utilizes the aforesaid level changes, the amplification for the time interval during which it is kept at its lower level is increased. If the scrambling method utilizes a signal order replacement system, the input signal is delayed, and during this delayed period, the signals are arranged or restored to the original order. The audio and video signals restored to their original form by use of the descramblers 24 and 25 are applied to the receiver *via* the output terminals 17 and 18. In addition, the start signal $S_1$ or the key discrimination signal $S_2$ may be used for finding the head of the tape at the time of playback by adding a code corresponding to the program thereto. It will be readily understood that the reading of the key discrimination signal from the memory may be made manually.

Various scrambling methods will be hereinafter explained in detail.

As the scrambled signals may be received by an ordinary receiver, it is required that the contents thereof may be kept as confidential as possible and the decoding of the key code used for unscrambling should not be easy. In the VTR, there are various impediments until the scrambled signals are recorded in the tape through the recording system, since various signal dispositions are required at the time of recording. The damage sustained at the time of recording remains as the incompleteness of the unscrambling at the time of playback and deteriorates its picture quality. Accordingly, in the system according to the present invention wherein the scrambled broadcast must be recorded on the VTR, it is desirable that the scrambled signals can pass through the recording system without any problem, the scrambling effect can be made large without disturbing the correlation between the signals, particularly in the case of the VTR for home use, and the unscrambling in the decoder can be made with ease. The following method takes the abovementioned points into consideration.

As the first step, the scrambling method for the video signal will be explained.

(1) V flicker method

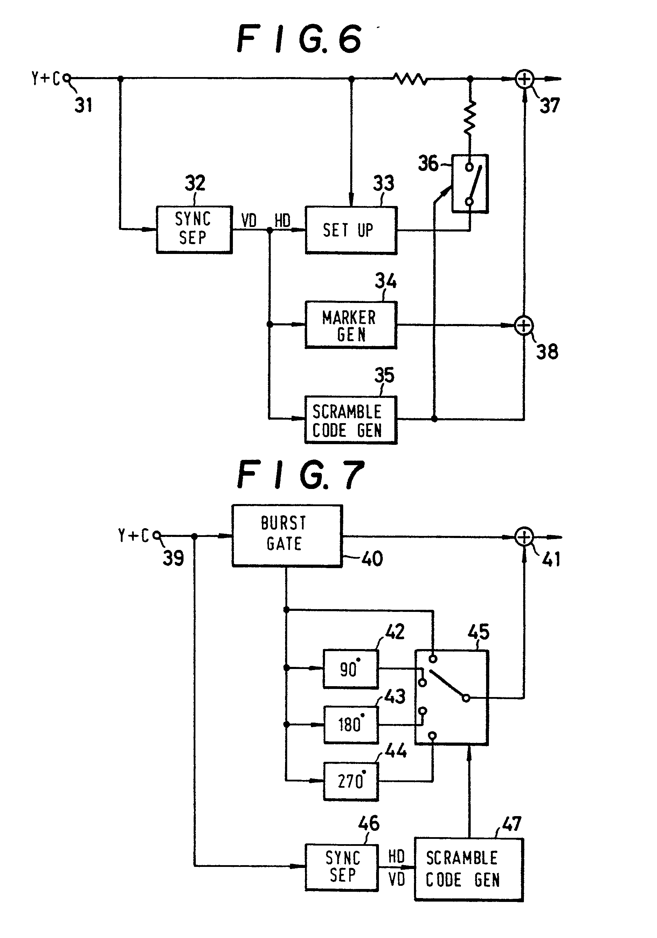

This method is the simplest one in which the signal level is changed based on one field unit as shown in Figure 5. In the drawing, the levels in the fourth, seventh and ninth fields are lowered by 2—3 dB. Since the sensitivity of human eyes is particularly high to plane flickering, a severe scramble effect can be obtained even with slight fluctuation of the intensity. In the example of Figure 5, a marker signal $S_9$ is inserted every tenth field, and the scrambling is performed by regarding ten fields to be one cycle. According to typical visual characteristics, the human eye is most sensitive to flicker at a frequency of 10—20 Hz, so that the key code pattern may be determined by regarding it to be one cycle. In reality, it may be sufficient to change only the level of the Y (luminous) signal, but it is more preferable that the level of C signal (chroma signal) is also changed at the same ratio since otherwise the ratio of Y to C varies temporarily. In this case, the composite Y+C signal can be scrambled as it is at the broadcasting station, and overmodulation of the chroma signal may be avoided. Since the ACC operation at the receiving side, in general, is slow and tracking of the burst signals is not possible, the addition of scramble effect to colour flicker may be possible. If the burst signal is made to change in level, the scrambling process will be simple. If the level of the burst signal is assumed to be constant, the process may become rather complex, but it will be easy to obtain comparatively large level changes. On the other hand, since the VTR is so designed that the ACC has a high speed response during playback, the recording and playback can be performed without any trouble.

Figure 6 shows an example of the scrambler for carrying out the above described flicker method.

A set-up detection circuit 33, a marker generator 34 and a scramble code generator 35 are operated based on VD and HD extracted by the sync separation circuit 32 from the Y+C signal applied to an input terminal 31. When a switch 36 is opened or closed according to the scramble code, the Y+C signal is changed in its level or scrambled according to the code pattern in synchronism with the field detection by means of the set up detection circuit 33. This scrambled signal is applied to an adder 37 and outputted after having been summed with the output of an adder 38, that is, the summed output of the marker signal and the scramble code. In this case, the aforesaid scramble code corresponds to the key signal $S_5$.

(2) Chroma flicker method

In this method, the scrambling of the C signal is performed by changing the phase of the burst signal in field units. Since this method modulates only the phase, there is no adverse effect on the signal-to-noise ratio even if it is passed through the VTR, and no disturbance is introduced into the correlation of the signal. For this reason, a high quality signal may be assured upon unscrambling. In addition, it can be realized without performing the separation that may cause a degradation of signal.

Figure 7 shows an example of a scrambler which performs the aforesaid method.

A burst signal extracted by a burst gate 40 from the Y+C signal applied to an input terminal 39 is applied to an adder 41. The extracted burst signal is also phase shifted to 90°, 180° and 270° by phase shifters 42, 43 and 44, respectively, and then applied to a switch 45. A scramble code generator 47 is driven by VD and HD from a sync separation circuit 46, and the switch 45 is successively switched by the scramble codes from the generator 47. The burst signal phase shifted from 0° up to 270° successively is added to the Y+C signal at the adder 41 and then outputted.

When the phase rotation of the burst signal is performed by this circuit for every field, the APC of the receiver can usually follow every field, so that the hue changes every field. In this example, scrambling will be performed by randomly changing the 12 Hz chroma flicker as well as the hue. At the time of recording by means of the VTR, the signal is recorded in the tape as it is since the control system can follow the burst phase without any delay. Accordingly, the original hue can be obtained by decoding it in the opposite sequence at the time of playback. This method may also be accomplished by switching the combination of at least two phases or of a large number of phases in many different forms. In more concrete form, it may also be accomplished by inserting the marker signal once every scramble cycle.

(3) Signal replacement method

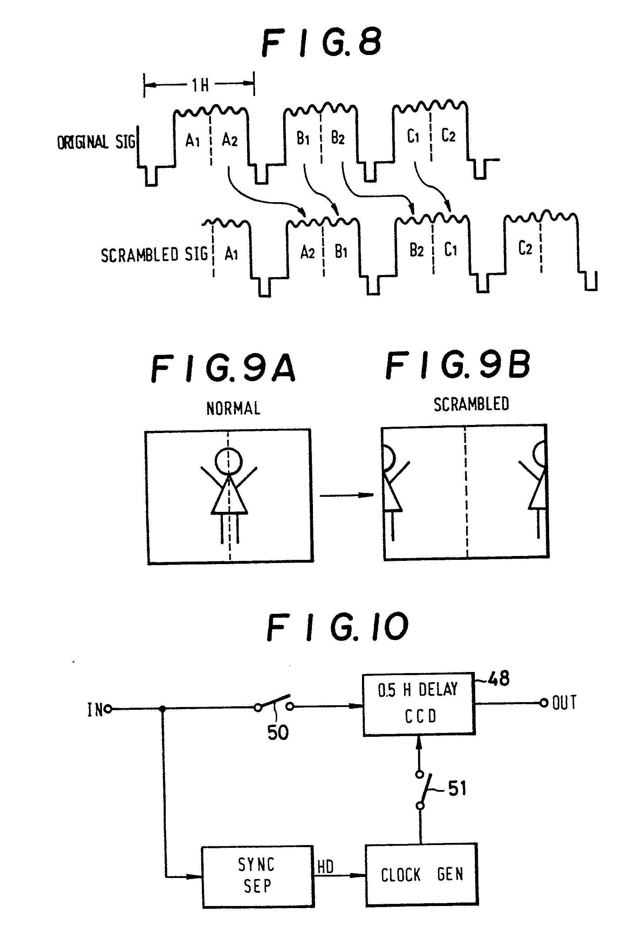

In the example of Figure 8, one period of time represented by 1H is divided into two parts, and the latter half is shifted to the position corresponding to the first half of the subsequent period of time H. If this signal is then received by an ordinary receiver, a picture whose left and right halves are shifted as shown in Figure 9B will be obtained (the normal picture is shown in Figure 9A).

Figure 10 shows one form of the scrambler based on the aforesaid method.

The scrambled signals shown in Figure 8 are obtained by delaying the input signal through a 0.6H delay circuit 48 constituted by a charge coupled device (CCD) or bucket brigade device (BBD). The CCD is driven by a clock n times higher than the HD frequency from a clock generator 49. Two switches 50 and 51 are open for the period of horizontal blanking.

If the normal signal is inserted into the scrambled signal of Figure 8 in field units the scramble effect will be further improved and the unscrambling will be made more difficult. If the insertion process is performed by a key code, the decoding operation will become more difficult. In Figure 10, this method can be realized by replacing the input signal or a signal obtained by delaying the input signal by 1H with the 0.5H delayed output by means of a switch, and selecting the input signal or the 1H delayed output at the aforesaid insertion point.

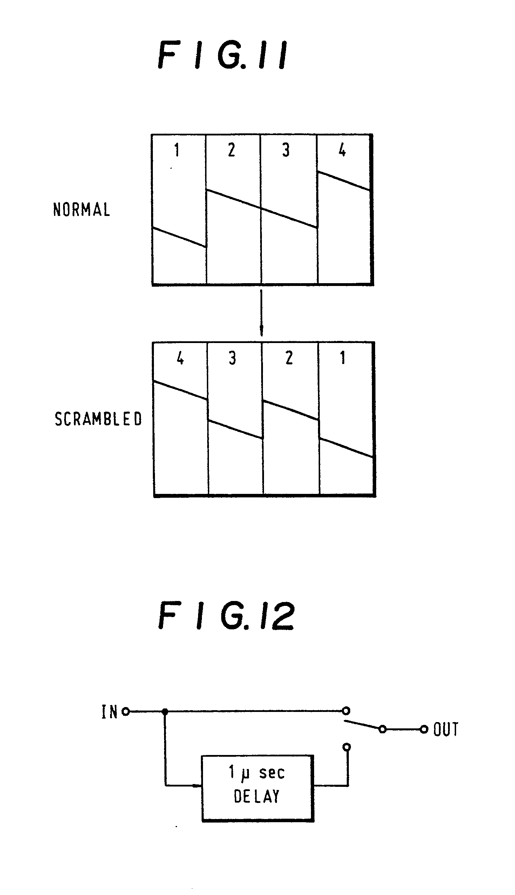

Figure 11 shows another arrangement wherein the normal screen is divided into four parts so as to be replaced in the desired order. This method can be readily realized by appropriately combining a 1/2 delay circuit and a 1/4 delay circuit.

(4) Ghost method

As illustrated in Figure 12, a pseudo-ghost can be obtained by delaying the input signal by approximately 1 μsec and changing over the switch every field.

(5) Time inversion method

This method will be realized by reading, in the direction opposite to the one at the time of writing, the signal written a line interval at a time into the memory regarding it as one field unit and combining with the normal field.

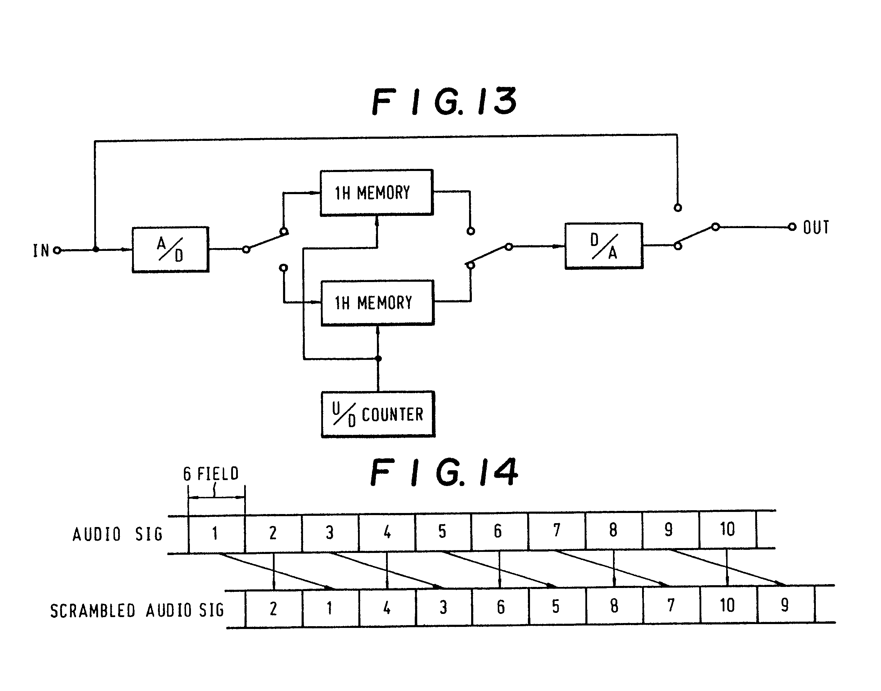

Figure 13 shows an example of a scrambler for performing the aforesaid method. As seen from the drawing, the input signal is first subjected to A/D conversion and then alternately written in two 1H memories *via* a switch which is changed one every 1H. While one side is written, the other side will be read. During writing, the up-down counter which controls the memory location being accessed counts up, whereas at the time of reading, it counts down causing read out in the opposite direction. The read-out signal is taken out through the right switch (also toggled every 1H) and subjected to D/A conversion. The D/A output and the original input signal are alternately outputted every one field through the switch to be switched every one field. If the scrambled signals are received by an ordinary receiver, an overlapped picture consisting of the normal picture and the picture reversed left to right will be reproduced on the screen.

Next, the scrambling method on the audio signal will be explained by way of examples.

(1) Signal replacement method

As shown in Figure 14, the reordering of the signal is performed using six fields as one unit. In the case of audio signal, it will be preferable to have a length of more than six fields (approx. 100 m.sec), for example, since, if the abovementioned unit is too short, the contents thereof may be discriminated. In this case, a marker signal indicative of the six field unit must be inserted, but the marker signal (for example, the marker signal $S_9$ in Figure 5) used for scrambling the aforesaid video signal can be utilized as the marker for the audio signal.

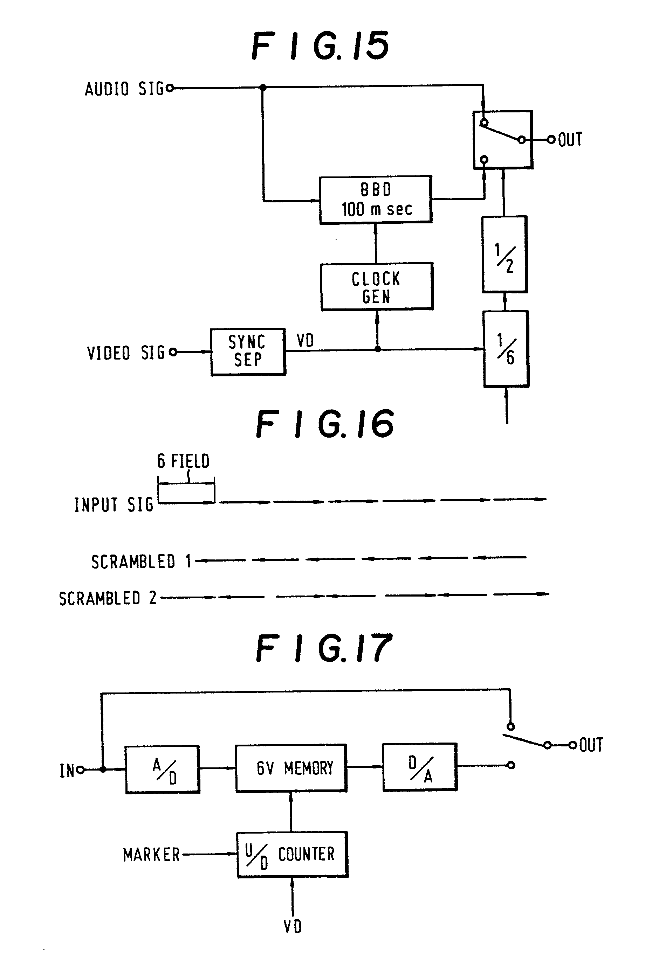

Figure 15 shows a scrambler which can be used for practicing the method of Figure 14.

A delay circuit BBD having a delay time of six fields always performs the writing and the reading of the input audio signal by the clock synchronized with VD for the video signal. The read-out signal and the original audio signal are alternately selected every twelfth field by the switch. Thus, the signals corresponding to the second, fourth, sixth fields in Figure 14 can be taken out as they are, and the signals corresponding to the first, third, fifth fields can be taken out with some delay. Needless to say, various forms of order replacement patterns may be used.

(2) Time inversion method

This method is based on the substantially same process as explained in connection with the scrambling method (5) for the video signal. As illustrated in Figure 16, the signal is written in the memory in six field units and then read out in the opposite direction continuously or in a combination of normal and reverse according to a desired pattern.

Figure 17 shows a form of the scrambler for use in this method. In the drawing, a six field memory performs the writing in the up direction with the help of an up/down counter and the reading in the down direction. The read-out signal and the original signal are selected by means of a switch and then outputted. The changeover of this switch is performed by the timing corresponding to the scramble pattern in Figure 16.

As previously described, according to the present invention, since the scrambled program is provided at its end with the key signal used at the time of unscrambling, it becomes impossible to watch the scramble broadcasting in real time, and the use of the recording and playback apparatus such as the VTR with the decoder is required to obtain the correct program. As stated above, there is no limitation to the type of VTR and the modification required for the VTR will be minimum.

In addition, since the code signal (signal $S_2$) denoting the kind of key signal is added to the start portion of the program, the key signal corresponding to the desired program can be checked prior to its playback.

**Claims**

1. A television system comprising means for scrambling at least either one of video signal ($S_7$) and audio signal ($S_3$) of specific programs in accordance with a predetermined scrambling scheme, means for generating a control signal in response to the predetermined scrambling scheme, said control signal including a key signal ($S_5$) which is used for unscrambling the signal scrambled in said scrambling means, characterised by means for transmitting said key signal ($S_5$) only after termination of said specific program which is to be unscrambled by first recording it and then unscrambling it during replay by reference to that key signal ($S_5$).

2. A system according to claim 1, in which said scrambling means includes means for changing said scrambling mode for different programs.

3. A system according to claim 2, in which said control signal further includes a program code signal ($S_2$) which is used for identifying said key signal ($S_5$) for said specific program.

4. A system according to claim 3, in which said program code signal ($S_2$) is transmitted before the transmission of said specific program.

5. For use in a television system, apparatus for unscrambling signals of specific program transmitted in a scrambled form by the system of any one of claims 1 to 4, said apparatus (2) being characterised in that it comprises: means for recording (5) on a recording medium, the scrambled signal ($S_3$ and/or $S_7$) representing the specific program; memory means (23) for storing a key signal ($S_5$) which is transmitted after termination of said specific program; means for reproducing (5) said scrambled signal ($S_3$ and/or $S_7$) from said recording medium; and means (2) for unscrambling said scrambled signal from said reproducing means (5) in accordance with said key signal ($S_5$) read out from said memory means (23).

6. Apparatus according to claim 5, in which said scrambled signal ($S_3$ and/or $S_7$) comprises a video signal ($S_7$) in use being supplied to said recording means (5) to be synchronized with synchronizing signals (VD . HD) of said video signal ($S_7$) which are not scrambled.

7. Apparatus according to claim 6, in which said unscrambling means (2) includes means for discriminating a program code signal ($S_2$), said program code signal ($S_2$) in use being supplied to said memory means (23) to read out said key signal ($S_5$) of said specific program therefrom.

**Patentansprüche**

1. Fernsehsystem mit einer Einrichtung zur Verschlüsselung des Videosignals (S$_7$) und/oder des Audiosignals (S$_3$) bestimmter Programme nach einem vorbestimmten Verschlüsselungsschema, ferner mit Mitteln zur Erzeugung eines Steuersignals in Abhängigkeit von diesem Verschlüsselungsschema, wobei dieses Steuersignal ein Schlüsselsignal (S$_5$) zur Verwendung bei der Entschlüsselung des in der Verschlüsselungseinrichtung verschlüsselten Signals enthält, gekennzeichnet durch Mittel zur Aussendung des Schlüsselsignals (S$_5$) erst nach der Beendigung des genannten bestimmten Programms, das zu entschlüsseln ist, indem es zunächst aufgezeichnet und dann während der Wiedergabe unter Bezug auf das Schlüsselsignal (S$_5$) entschlüsselt wird.

2. Fernsehsystem nach Anspruch 1, bei dem die Verschlüsselungseinrichtung Mittel zum Wechsel den Verschlüsselungsschemas für verschiedene Programme enthält.

3. Fernsehsystem nach Anspruch 2, bei dem das Steuersignal ein Programmcodesignal (S$_2$) enthält, das zur Identifizierung des Schlüsselsignals (S$_5$) für das bestimmte Programm verwendet wird.

4. Fernsehsystem nach Anspruch 3, bei dem das Programmcodesignal (S$_2$) vor der Sendung des bestimmten Programms ausgesendet wird.

5. Zur Verwendung in einem Fernsehsystem bestimmtes Gerät zum Entschlüseln von Signalen eines bestimmten Programms, das von einem System nach einem der Ansprüche 1 bis 4 in verschlüsselter Form gesendet wird, gekennzeichnet durch eine Aufnahmeeinrichtung (5) zur Aufzeichnung des das bestimmte Programm darstellenden verschlüsselten Signals (S$_3$ und/oder S$_7$ auf einem Aufzeichnungsmedium, Speichermittel (23) zur Speicherung eines Schlüssel-Signals (S$_5$), das nach Beendigung des bestimmten Programms gesendet wird, eine Wiedergabeeinrichtung (5) zur Wiedergabe des verschlüsselten Signals (S$_3$ und/oder S$_7$) von dem Aufzeichnungsmedium, sowie eine Einrichtung (2) zum Entschlüsseln des von der Wiedergabeeinrichtung (5) wiedergegebenen verschlüsselten Signals gem. dem aus den genannten Speichermitteln (23) ausgelesenen Schlüsselsignal (S$_5$).

6. Gerät nach Anspruch 5, bei dem das verschlüsselte Signal (S$_3$ und/oder S$_7$) ein Videosignal (S$_7$) enthält, das der genannten Aufnahmeeinrichtung (5) zugeführt wird, die mit unverschlüsselten Synchronisiersignalen (VD · HD) des Videosignals (S$_7$) zu synchronisieren ist.

7. Gerät nach Anspruch 6, bei dem die Entschlüsselungseinrichtung (2) Mittel zur Diskriminierung eines Programmcodesignals (S$_2$) enthält, das den Speichermitteln (23) zuführbar ist, um aus diesen das Schlüsselsignal (S$_5$) des bestimmten Programms auszulesen.

**Revendications**

1. Système de télévision comportant un dispositif de cryptage d'au mions un signal vidéo (S$_7$) et d'un signal de son (S$_3$) de programmes spécifiques en fonction d'un schéma de cryptage prédéterminé, un dispositif qui produit un signal de commande en réponse au schéma de cryptage prédéterminé, ledit signal de commande contenant un signal clé (S$_5$) qui est utilisé pour décrypter le signal crypté dans ledit dispositif de cryptage, caractérisé par un dispositif d'émission dudit signal clé (S$_5$), seulement après la fin dudit programme spécifique qui doit être crypté, par un premier enregistrement de ce programme et ensuite son décryptabe pendant la reproduction, en référence audit signal clé (S$_5$).

2. Système selon la revendication 1, dans lequel ledit dispositif de cryptage contient un dispositif destiné à changer ledit mode de cryptage pour des programmes différents.

3. Système selon la revendication 2, dans lequel ledit signal de commande contient en outre un signal de code de programme (S$_2$) qui est utilisé pour identifier ledit signal clé (S$_5$) pour ledit programme spécifique.

4. Système selon la revendication 3, dans lequel ledit signal de code de programme (S$_2$) est émis avant l'émission dudit programme spécifique.

5. Appareil destiné à être utilisé dans un système de télévision pour décrypter des signaux d'un programme spécifique émis sous une forme cryptée par le système selon l'une quelconque des revendications 1 à 4, ledit appareil (2) étant caractérisé en ce qu'il comporte: un dispositif d'enregistrement (5) sur un support d'enregistrement du signal crypté (S$_3$ et/ou S$_7$) représentant le programme spécifique; une mémoire (23) pour mémoriser un signal clé (S$_5$) qui est émis après la fin dudit programme spécifique; un dispositif de reproduction (5) dudit signal crypté (S$_3$ et/ou S$_7$) à partir dudit support d'enregistrement; et un dispositif (2) de décryptage dudit signal crypté provenant dudit dispositif de reproduction (5) en fonction dudit signal clé (S$_5$) lu dans ladite mémoire (23).

6. Appareil selon la revendication 5, dans lequel ledit signal crypté (S$_3$ et/ou S$_7$) consiste en un signal vidéo (S$_7$) en utilisation, fourni audit dispositif d'enregistrement (5) pour être synchronisé avec des signaux de synchronisation (VD, HD) dudit signal vidéo (S$_7$) qui ne sont pas cryptés.

7. Appareil selon la revendication 6, dans lequel ledit dispositif de décryptage (2) comporte un dispositif de discrimination d'un signal de code de programme (S$_2$), ledit signal de code de programme (S$_2$) étant fourni en utilisation à ladite mémoire (23) pour la lecture dudit signal clé (S$_5$) dudit programme spécifique.

FIG.1

FIG.2

# F I G. 3

AUDIO CHANNEL

| S1 | S2 | S3 | S4 | S5 | S6 |
|---|---|---|---|---|---|
| START SIG | KEY DISCRI SIG | PROGRAM (SCRAMBLED) | WRITE START SIG | KEY SIG | WRITE STOP SIG |

VIDEO CHANNEL

| | PROGRAM (SCRAMBLED) | S7 | HOR SYNC SIG |
|---|---|---|---|

VD.HD

FIG. 4

FIG. 5

# F I G. 6

# F I G. 7

## F I G.8

## F I G.9A

NORMAL

## F I G.9B

SCRAMBLED

## F I G.10

# F I G. II

NORMAL

SCRAMBLED

# F I G. I2

IN o

OUT

1 μ sec
DELAY

# F I G. 13

# F I G. 14

6 FIELD

AUDIO SIG

| 1 | 2 | 3 | 4 | 5 | 6 | 7 | 8 | 9 | 10 |
|---|---|---|---|---|---|---|---|---|----|

SCRAMBLED AUDIO SIG

| 2 | 1 | 4 | 3 | 6 | 5 | 8 | 7 | 10 | 9 |
|---|---|---|---|---|---|---|---|----|---|

0 074 810

# F I G.15

AUDIO SIG ○

OUT ○

BBD
100 m sec

CLOCK
GEN

½

VIDEO SIG ○ | SYNC SEP | VD

⅙

# F I G.16

6 FIELD

INPUT SIG

SCRAMBLED 1

SCRAMBLED 2

# F I G.17

IN ○

OUT ○

| A/D | → | 6V MEMORY | → | D/A |

MARKER ——— U/D COUNTER

VD